# EUROPEAN PATENT SPECIFICATION

(11) **EP 2 699 455 B1**
(45) Date of publication and mention of the grant of the patent: **30.03.2016**
(21) Application number: 11863916.0
(22) Date of filing: 18.04.2011
(51) Int. Cl.: B60R 21/38, F15B 15/14, F15B 15/19

(54) **HOOD LIFTING ARRANGEMENT**
HEBEANORDNUNG FÜR EINE MOTORHAUBE
AGENCEMENT DE SOULÈVEMENT DE CAPOT

(43) Date of publication of application: 26.02.2014
(73) Proprietor: Autoliv Development AB, 447 83 Vårgårda (SE)
(72) Inventor: KUNTZSCH, Stefan, S-52496 Ljung (SE)
(74) Representative: Bergquist, Kjell Gunnar
(86) International application number: PCT/SE2011/050465
(87) International publication number: WO 2012/144939

(56) References cited:
- EP-A1- 1 849 663
- EP-A1- 2 187 065
- WO-A1-2008/026423
- DE-A1-102005 024 357
- DE-A1-102008 039 168
- GB-A- 2 375 329
- GB-A- 2 395 693

## Description

The invention relates to an actuator for a vehicle safety system which is suitable for example to be used for lifting of the hood or bonnet of a vehicle in order to provide protection for a pedestrian hit by the vehicle.

It has been observed that if a motor vehicle hit a pedestrian will the bumper of the vehicle often strike the legs or lower torso of the pedestrian. Hence, the legs of the pedestrian will normally be pushed in the direction of travel of the vehicle and the head and upper torso will normally be tilted towards the hood and windscreen of the vehicle. This tilting movement often causes the head or upper torso of the pedestrian to first make contact with the hood and thereafter, if the impact force from the hit is strong enough and the vehicle continues forward, also reach the windscreen.

In order to minimize the damages of the pedestrian caused from such an impact as described above, it has been proposed to use some kind of hood lifting arrangements. These arrangements are generally constructed such that the rear part of the hood, i.e. the part closest to the windscreen, is lifted. Such arrangements are for example disclosed in WO 2007/067 121 and EP 2 256 007. The hood will in general provide an efficient, flexible impact energy absorbing structure in the case when a vehicle hit a pedestrian. However, if the hood not is lifted, there is a higher risk that the hood will be deformed to such an extent that hard, non-flexible parts beneath the hood, e.g. an engine block, make contact with the hood and an undesired, stiff impact may be the result from the collision between the pedestrian and the vehicle. In addition, the raising of the rear part of the hood will make the surface of the hood further inclined and contribute to a reduced speed of a body moving towards the windshield. In addition, a less acute angle between the wind shield and the hood will also contribute to a less severe condition for a person being hit by a vehicle. Hence, the use of an active safety arrangement for lifting the hood contributes significantly to reduce the risk of damages for a person being hit by a vehicle.

In order to lift the hood there are several different suggestions of how the hood lifter shall be designed. One suggestion is to use some kind of piston and housing which when actuated will push the piston to be extended out of the housing and thereby cause a lifting action of the hood or bonnet. Such lifting devices are for example disclosed in JP 2008-075739.

Even though the above described prior art provides working examples of actuators serving as hood lifters, there is still a desire for improvements of hood lifters with respect to their functionality and reliability. Hence, the present invention is directed to an actuator suitable to be used as a hood lifter with improved reliability and thus providing an enhanced safety for a pedestrian hit by a vehicle.

The present invention is in particular directed to an improved sealing of the top of an actuator, comprising a housing and a piston, which is suitable to be used as a hood lifter. By the top of the actuator is meant the end of the housing through which the piston is intended to extend when the actuator is activated. To seal the top of these kinds of actuators serving as hood lifters is known since before from, for example, JP 2008-075 739. The main purpose for providing an actuator with a sealing is to avoid dirt, mist or dust to enter into the hood lifter and thus protect it from negative influence of the environment which may lead to malfunction of the lifter. Hence, a sealing is intended to assure the functionality of an actuator for several years after it has been mounted. Also GB 2 375 329 discloses a safety arrangement, a belt tensioner, in which there is described a sealing arrangement for the actuator, according to the preamble of claim 1. However, even though different kinds of sealings are known, there is a desire for providing a sealing which is easy to manufacture and to mount in the safety arrangement while providing a reliant seal of the actuator.

The sealing according to the invention comprises a cap portion covering the top of a piston and an anchoring portion adapted to fit between the piston and the housing such that the sealing will provide a tight seal between the piston and the housing. The housing is in the form of a hollow element having a cavity inside adapted to receive a piston. In general, the housing is in the form of a hollow cylinder and the piston comprises a circular shaped rod.

The housing may be a specific housing for the actuator or may form part of another structure. However, the specific shape of the piston and the housing is not essential for the invention and the piston may have other shapes, for example rectangular or hexagonal cross sectional area.

Hence, the actuator according to the invention comprises a housing and a piston which is at least partly contained in a cavity of the housing. The housing has a first end and a second end and is designed to be adapted to comprise or be connected to a power source at its first end. The piston also has a first end and a second end and being located in the housing such that said first end of the piston is facing towards the first end of the housing. The second end of the housing comprises an opening through which the piston will be pushed and extend when the actuator is activated. The actuator also comprises a sealing having a cap covering the second end of the piston. The sealing further comprises an anchoring portion which is located between the housing and the piston so as to form a seal between the piston and the housing at the second end of the housing.

According to an embodiment of the invention is the sealing designed to break when the actuator is activated such that the cap will be separated from the anchoring portion. This feature is not necessary but by separating the parts completely the separated parts may serve for specific purposes as will be discussed in detail further below. In order to facilitate and control the separation of the cap and the anchoring portion of the sealing, it is possible to design the sealing such that it comprises a weakened section or indentations between the cap and the anchoring portion. When the actuator is activated, the sealing will break while the piston is pushed through the opening in the second end of the housing.

According to one embodiment of the invention is the sealing designed such that at least a part of the anchoring portion of the sealing is located between the longitudinally extending side or sides of the piston and the inner side of the housing. In this case may the anchoring portion be designed as a hollow part having an open end and one closed end provided with said cap and the sealing is adapted to fit onto the second end of the piston such that that the cap covers the second end of the piston and the hollow anchoring portion covers the side surface or side surfaces of the piston adjacent to its second end. The shape of the hollow portion is preferably adapted to the shape of the piston and also preferably adapted to fit closely on the piston.

The anchoring portion may also have other shapes than being tube-shaped or shaped as a hollow ring, e.g. having one or several protrusions extending from the cap or being shaped as a mesh or net located between the sidewall(s) of the piston and housing.

However, it could also be possible to design the sealing such that it is essentially flat, e.g. shaped as a disc, and having its cap portion covering the piston end and the anchoring portion surrounding the cap portion.

As discussed briefly above, the sealing may serve further purposes when the actuator has been activated. For example may the anchoring portion of said sealing remain inside the housing such that when the piston is moving upwards, to prolong its extension through the second end of the housing, the anchoring portion will be located between the longitudinally extending side or sides of the piston and the inner side of the housing. If the anchoring portion has been constructed or designed as a plastically deformable structure it may serve as an energy absorbing structure which absorbs energy while the motion of the piston is slowed down and stopped by interaction between a protruding part of the piston, e.g. an enlarged piston base, and a narrowing of the cavity in the housing, preferably close to the second end of the housing, e.g. narrowing edges at the opening. Hence, if the anchoring portion remains within the housing, it will be squeezed between the protruding part of the piston and the housing while stopping the motion of the piston. It is above suggested that there shall be a plastic deformation of some kind of energy absorbing structure. An advantage with a structure which plastically deforms is that it will not provide a force to the piston in the downwards direction and thus work in the opposite direction compared to the desired pushing direction of the piston. However, it may also be possible to use an element which is elastically deformed, e.g. some kind of rubber or the like, which may be easier to manufacture. Since the anchoring portion also serves as a part of the sealing, it may be desired to use an elastic material for the purpose of providing a tight seal. It may also of course be possible to use a combination of plastic and elastic deformable structures of the anchoring portion to serve as an energy absorbing structure for stopping the movement of the piston.

If the anchoring portion is designed to remain in the housing after the actuator has been activated it may also serve the function of forming a seal between the piston and the housing at its second end for preventing gas to leak through the second end of the housing when the actuator has been activated. Hence, the anchoring portion may thus prolong the time during which the actuator is in its activated, extended state by preventing or decreasing the rate by which gas will leak from the actuator.

For the purpose of manufacturing it is considered to be of advantage if the sealing, comprising the cap and the anchoring portion, is made as one integral piece.

The sealing may be made of several different material and suitable material are for example rubber, plastics or a combination thereof. Concerning the possibility to use the sealing as an impact absorbing structure it may be desired to include further material, e.g. a metal, to reinforce the structure.

It may be desired to design the actuator such that the cap of the sealing remains in its position on top of the second end of said piston after the actuator has been activated. An advantage with this arrangement is that the cap may serve as an impact energy absorbing structure when the actuator is activated and the second end of the piston hits the surface which it is supposed to make contact with. If the cap for example is made of rubber or plastics, the cap will probably deform when hitting the surface and thereby provide a better distribution of the lifting force on the surface and also contribute to a more soft impact. In order to make the cap stay on top of the piston should it be designed and adapted to the second end of the piston such that it will be attached to the piston even if it is departed from the anchoring portion of the sealing. This may for example be achieved by having one or several recesses in the surface of the piston at its second end and having a cap adapted to fit into the recess or recesses. However, it is not of particular importance how this feature is achieved as long as the cap stays on top of the piston and it may be also be glued, welded or attached in any way making the cap stay on top when the actuator is activated.

The actuator may be activated by a multitude of different power sources. It may for example be designed such that said housing comprises a pyrotechnic charge located at the first end of the housing which, when activated, will burn and thereby pushing the piston to extend through the second end. As an alternative, the actuator may be connected to a source of pressurized gas which is controlled to enter into the actuator when it is activated.

The actuator described above may be used for any kind of safety arrangement in a vehicle where it is desired to effectuate a sudden movement of a part in the vehicle. One such arrangement for which the actuator is suitable is a hood lifting arrangement forming part of a pedestrian safety system in which the actuator may serve as a hood lifter. Such a hood lifter have a particular need for protection since it is located in a position where it may suffer from moist and dirt from the environment as well as relatively strong temperature variations due to heat from the engine compartment.

FIGURE 1 a-d discloses a cross sectional view of an actuator and its main parts according to an embodiment of the invention

FIGURE 2 a-c disclose different embodiments of a sealing according to the invention

FIGURE 3 a-d disclose different stages during activation of an actuator

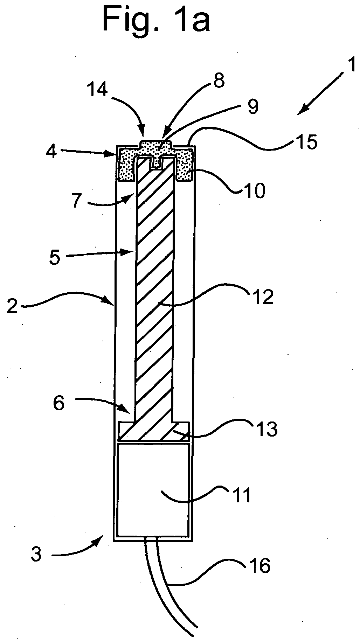

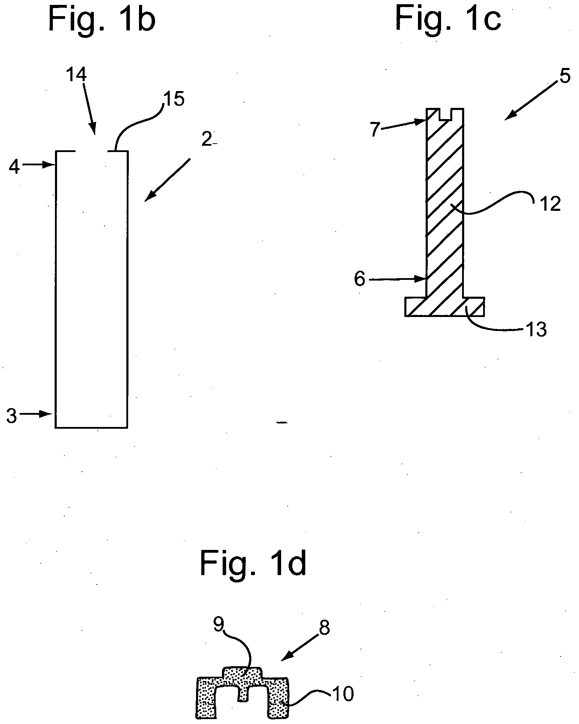

The same reference numbers will be used for the same features in all figures 1 - 3.

In figure 1a is disclosed an actuator 1 comprising a housing 2 in the form of a cylinder , a piston 5 and a sealing 8. The sealing 8 is located at the second end 4 of the cylinder 2 and seals a space between the piston 5 at its second end 7 and the housing 2 such that moisture, dirt or other particles are prevented from entering into the cylinder through an opening 14 provided with edges 15 in the second end 4 of the cylinder. The opening 14 allows the piston to move and extend out of the cylinder when the actuator 1 is activated. The piston 5 comprises a piston rod 12 and a piston base 13 located at its first end 6. The piston 5 is designed such that the piston rod 12 may easily pass through the opening 14 while the piston base 13, which has a larger cross sectional area, will not pass through the opening 14 which cross sectional area is smaller due to the edges 15 surrounding the opening 14 and protruding inwards. In this embodiment is also a pyrotechnic charge 11 comprised in the housing which is provided with a connector 16 such that the actuator may be connected to a control unit for activation of the pyrotechnic charge 11 and the actuator 1.

Fig 1b discloses a cross sectional view of the housing 2 which comprises an opening 14 at its second end 4 surrounded by edges 15 and adapted to receive a power source at its first end 3.

Fig 1c discloses a piston 5 having an oblong piston rod 12 provided with a piston base 13 at its first end 6 adapted to fit close with the inner walls of the housing. The piston 5 is further adapted to fit in with a sealing at its second end 7. The piston 5 is designed such that its piston rod 12 is adapted to be able to pass through an opening in a housing and thereby may extend through the opening of the housing while the size of the piston base 13 is larger such that said piston base 13 not will pass through the opening of the housing. It is further shown that the piston 5 at its second end 7 is provided with an indentation or cut out in order to fit with a protrusion of a sealing.

Fig 1d discloses a sealing 8 adapted to fit in with the top of a piston and seal a space between the piston and an opening in a housing. The sealing comprises a cap 9 adapted to be located on top of the piston and an anchoring portion 10 attached to the cap 9 in order to keep the sealing at its desired location when mounted in an actuator. The sealing 8 is usually adapted to break at some place between the cap 9 and the anchoring portion 10 when an actuator provided with the sealing 8 is activated. The cap portion 8 is further provided with a protrusion adapted to fit with a piston and improve the attachment of the cap 9 to a piston which may be in particular useful when the cap portion 9 is separated from the anchoring portion 10 and it is desired to keep the cap 9 on top of the end of the piston.

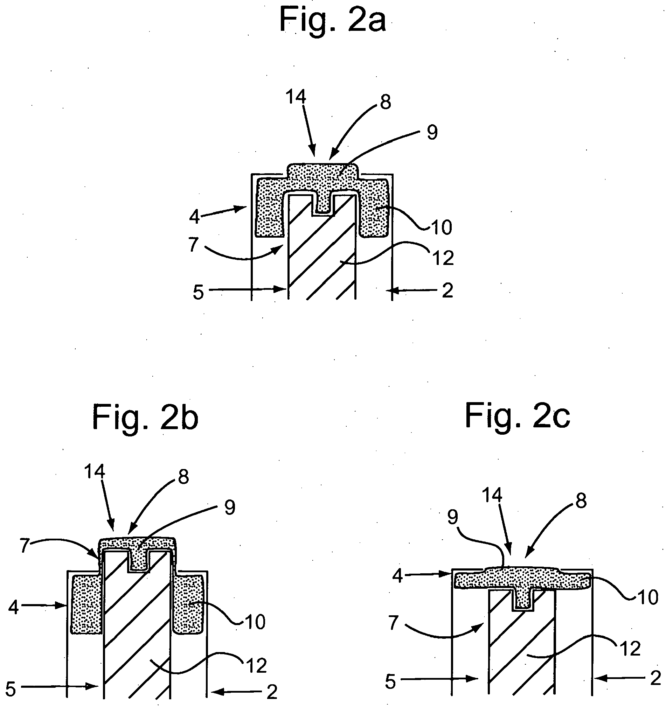

In figure 2 are three different embodiments of the sealing 8 of an actuator 1 shown. In figure 2a is shown a first embodiment in which the second end 7 of the piston 5 is essentially aligned with the opening 14 in the second end 4 of the housing 1. The cap 9 is located on top of the second end 7 of the piston 5 and the sidewalls of the piston 5 close to its second end 7 is covered with a hollow, tube-shaped anchoring portion 10 attached to the cap 9 so as to form a seal. Hence, the anchoring portion 10 is located between the inner walls of the housing 2 and the piston rod 12. When the actuator 1 is activated is the sealing 8 intended to break such that the anchoring portion 10 will remain in the housing 2. When the enlarged portion of the piston 5 at its first end 6, i.e. the piston base 13 (See fig 1a), reaches the second end 4 of the housing 2, the anchoring portion 10 will be squeezed between the piston base and the edges 15 at the opening 14 so as to provide an energy absorbing structure while the piston 5 is stopped and also serve as a seal to prevent leakage of gas in order to prolong the stay up time for the actuator 1.

In figure 2b is disclosed an embodiment of the sealing which is essentially the same as the one described in figure 2a but in this embodiment is the piston 5 protruding somewhat out of the opening 14 in the housing 2 in its resting position.

In figure 2c is disclosed an embodiment of the sealing which differs from the sealings disclosed in the previous embodiments in that this sealing 8 does not have a hollow anchoring portion but the anchoring portion 10 corresponds to a flat structure extending from the cap portion. This design may be possible if the second end 7 of the piston 5 is located inside the housing and thus makes it possible to use a sealing 8 which cap 9 and anchoring portion 10 forms an essentially disc-shaped element.

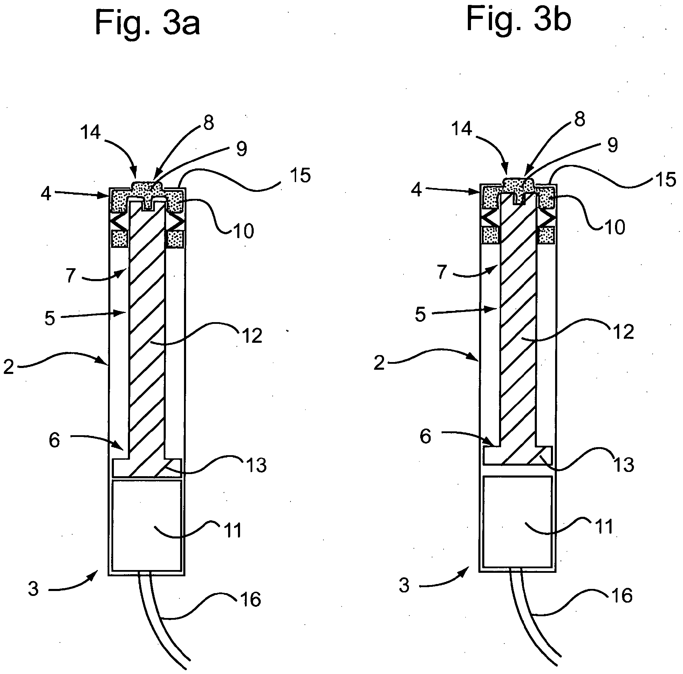

In figures 3a-3d is shown an actuator 1 during different stages when the actuator is activated.

In figure 3a is the actuator shown before it has been activated, i.e. when the actuator is in its stand-by position. The sealing 8 is pressed by the second end 7 of the piston 5 against the edges 15 surrounding the opening 14 of the housing 2 at its second end 4 so as to provide a tight seal at the opening 14.

In figure 3b has the actuator 1 just been activated and the power source in the form of a pyrotechnic charge 11 has started to effectuate a force on the piston base 13 such that the piston 5 has moved somewhat upwards and presses the sealing 8 further upwards.

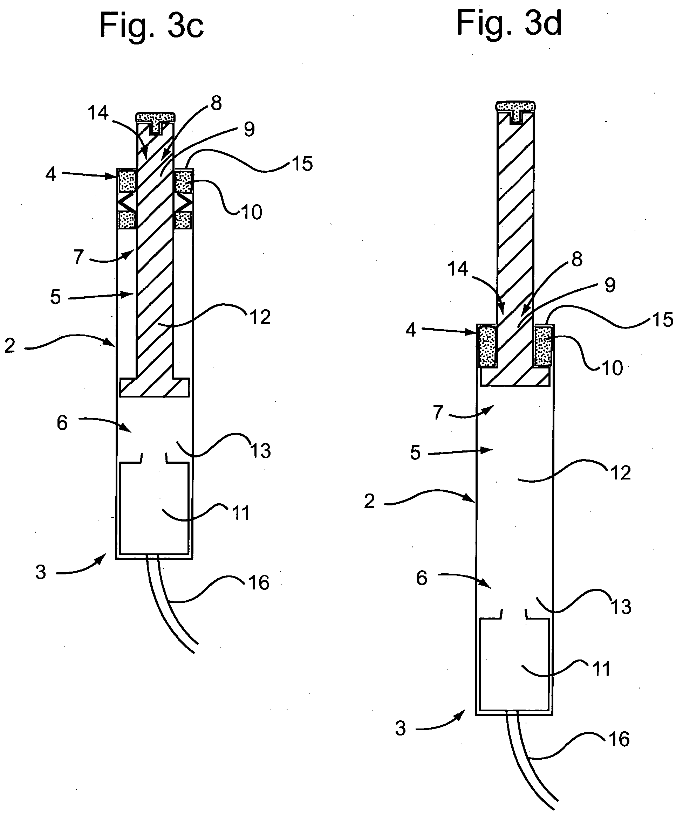

Figure 3c is showing the actuator 1 at a later stage when the piston 2 has moved further upwards. The sealing 8 has broken and the cap 9 is now located on the second end 7 of the piston 5 while the anchoring portion 10 remains within the housing 2 at its second end 4. In order to facilitate the breakage of the sealing 8 at the desired locations, the sealing 8 may be provided with indentations or weakenings in order to control where the breakage will be. In use, when located in a vehicle, the piston 2 is usually in contact with a hood at the latest at this stage and the cap portion 9 remaining on top of the piston 2 may contribute to a better distribution of the impact force and reducing undesired vibrations which may occur when the piston 2 hits the hood.

Figure 3d shows the actuator 1 when the piston 5 has reached its end position and the hood is raised as much as possible. It may be noted that the anchoring portion 10 has been deformed by being compressed of the enlarged piston base. Hence, the anchoring portion 10 has absorbed energy while being compressed and thus reduces the impulse from the piston 5 on the edges 15 to provide a smoother stop of the raising movement of the piston 5. The anchoring portion 10 may also serve as a sealing preventing/decreasing leakage of the high pressure in the housing 2 such that a prolonged stay-up time may be achieved.

Hence, the present sealing 8 provides a multitude of possibilities to improve a hood lifter in addition to the feature of sealing the interior of the actuator 1 from undesired matters, e.g. moisture or particles. The anchoring portion 10 may thus be designed to absorb energy while slowing down the piston 5 before it stops completely and may also serve to seal the pressurized chamber of the housing 1 in order to keep the piston 5 in its end position and the cap may contribute to a smother contact with a hood to be lifted and a better distribution of the forces working on the hood from the piston. By selecting material and design of the sealing 8 will it be possible to influence the functions of the sealing 8 mentioned above. For example, the anchoring portion 10 shall absorb some of the impact energy but it should not absorb too much such that the lifting force will be considerably reduced and the lifting force not will be enough to fully raise the piston and withstand the impact of a person hitting a hood lifted by the actuator 1.

In the embodiment of figure 3 is the sealing 8 shown as a structure comprising a collapsible anchoring portion 10. This is only meant to serve as an example and such a sealing as disclosed in any of figures 1 or 2 could be used as well.

## Claims

1. An actuator (1) for a safety device in a vehicle, said actuator (1) comprising a housing (2) having a first end (3) and a second end (4) whereof said first end (3) is adapted to comprise or be connected to a power source, a piston (5) adapted to fit in the housing (2) and said piston (5) having a first end (6) and a second end (7) whereby said first end (6) of the piston (5) is facing towards the first end (3) of the housing (2) when the piston (5) is located in the housing (2), said actuator (1) further comprising a sealing (8) having a cap (9) covering the second end (7) of the piston (5) said sealing (8) further comprises an anchoring portion (10) which is located between the housing (2) and the piston (5) and thereby forming a seal between the piston (5) and the housing (2) at the second end (4) of the housing.
**characterised in that**
said sealing (8), comprising said cap (9) and said anchoring portion (10), is made as one integral piece and is designed to break when the actuator (1) is activated such that the cap (9) will be separated from the anchoring portion (10).

2. An actuator (1) according to claim 1 **characterised in that** said sealing (8) comprises a weakened section or indentations between the cap (9) and the anchoring portion (10) to facilitate a separation of the cap (9) from the anchoring portion (10) when the actuator (1) is activated.

3. An actuator (1) according to any previous claim **characterised in that** at least a part of said anchoring portion (10) of said sealing (8) is located between the longitudinally extending side or sides of the piston (5) and the inner side of the housing (2).

4. An actuator (1) according to claim 3 **characterised in that** said anchoring portion (10) is designed as a hollow part having an open end and one closed end provided with said cap (9) whereby said sealing (8) is adapted to fit onto said second end (7) of said piston (5) such that that the cap (9) covers said second end (7) of said piston (5) and the hollow anchoring portion (10) cover the side surface or side surfaces of the piston (5) adjacent to its second end (7).

5. An actuator (1) according to any previous claim **characterised in that** said anchoring portion (10) of said sealing (8) is designed as a plastically deformable structure adapted to collapse while absorbing energy when said actuator (1) is activated and the first end (6) of the piston (5) moves towards the second end (4) of the housing (2) and make contact with the anchoring portion (10).

6. An actuator (1) according to any previous claim **characterised in that** said anchoring portion (10) of said sealing (8) is designed as an elastically deformable structure adapted to be compressed while absorbing energy when said actuator (1) is activated and the first end (6) of the piston (5) moves towards the second end (4) of the housing 82) and make contact with the anchoring portion (10).

7. An actuator (1) according to any previous claim **characterised in that** said sealing (8) is made of rubber, plastics or a combination thereof.

8. An actuator (1) according to any previous claim **characterised in that** said cap (9) remains in its position on top of the second end (7) of said piston (5) after the actuator (1) has been activated.

9. An actuator (1) according to any previous claims **characterised in that** said anchoring portion (10) is designed to remain in the housing (2) after the actuator (1) has been activated and is adapted to function as a seal between the piston (5) and the housing (2) at its second end (4).

10. An actuator (1) according to any previous claims **characterised in that** said housing (2) comprises a pyrotechnic charge (11) located at the first end (3) of the housing (2).

11. A pedestrian safety system comprising a hood lifting arrangement **characterised in that** it comprises an actuator (1) as described in any of claims 1 - 10 for lifting of a hood.

12. Use of an actuator according to anyone of claims 1-10 in a hood lifting arrangement for a vehicle.

## Patentansprüche

1. Stellglied (1) für eine Sicherheitsvorrichtung in einem Fahrzeug, wobei das Stellglied (1) ein Gehäuse (2) mit einem ersten Ende (3) und einem zweiten Ende (4), wovon das erste Ende (3) so ausgelegt ist, dass es eine Energiequelle umfasst oder damit verbunden ist, einen Kolben (5) umfasst, der so ausgelegt ist, dass er in das Gehäuse (2) passt, und wobei der Kolben (5) ein erstes Ende (6) und ein zweites Ende (7) aufweist, wobei das erste Ende (6) des Kolbens (5) dem ersten Ende (3) des Gehäuses (2) zugewandt ist, wenn sich der Kolben (5) in dem Gehäuse (2) befindet, wobei das Stellglied (1) ferner eine Dichtung (8) mit einer Kappe (9) umfasst, die das zweite Ende (7) des Kolbens (5) abdeckt, wobei die Dichtung (8) ferner einen Verankerungsabschnitt (10) umfasst, der sich zwischen dem Gehäuse (2) und dem Kolben (5) befindet und dadurch eine Abdichtung zwischen dem Kolben (5) und dem Gehäuse (2) am zweiten Ende (4) des Gehäuses bildet,
**dadurch gekennzeichnet, dass**
die Dichtung (8), die die Kappe (9) und den Verankerungsabschnitt (10) umfasst, als ein einstückiges Teil gefertigt ist und so ausgestaltet ist, dass sie reißt, wenn das Stellglied (1) betätigt wird, sodass die Kappe (9) von dem Verankerungsabschnitt (10) getrennt wird.

2. Stellglied (1) nach Anspruch 1, **dadurch gekennzeichnet, dass** die Dichtung (8) einen geschwächten Abschnitt oder Einkerbungen zwischen der Kappe (9) und dem Verankerungsabschnitt (10) umfasst, damit eine Trennung der Kappe (9) von dem Verankerungsabschnitt (10) vereinfacht wird, wenn das Stellglied (1) betätigt wird.

3. Stellglied (1) nach einem der vorhergehenden Ansprüche, **dadurch gekennzeichnet, dass** sich zumindest ein Teil des Verankerungsabschnitts (10) der Dichtung (8) zwischen der längs verlaufenden Seite oder den längs verlaufenden Seiten des Kolbens (5) und der Innenseite des Gehäuses (2) befindet.

4. Stellglied (1) nach Anspruch 3, **dadurch gekennzeichnet, dass** der Verankerungsabschnitt (10) als hohles Teil ausgestaltet ist, das ein offenes Ende und ein geschlossenes Ende aufweist, das mit der Kappe (9) versehen ist, wodurch die Dichtung (8) so ausgelegt ist, dass sie auf das zweite Ende (7) des Kolbens (5) passt, sodass die Kappe (9) das zweite Ende (7) des Kolbens (5) abdeckt und der hohle Verankerungsabschnitt (10) die Seitenfläche oder Seitenflächen des Kolbens (5) angrenzend an sein zweites Ende (7) abdeckt.

5. Stellglied (1) nach einem der vorhergehenden Ansprüche, **dadurch gekennzeichnet, dass** der Verankerungsabschnitt (10) der Dichtung (8) als plastisch verformbare Struktur ausgestaltet ist, die so ausgelegt ist, dass sie unter Energieaufnahme zusammensinkt, wenn das Stellglied (1) betätigt wird und sich das erste Ende (6) des Kolbens (5) in Richtung des zweiten Endes (4) des Gehäuses (2) bewegt und den Verankerungsabschnitt (10) berührt.

6. Stellglied (1) nach einem der vorhergehenden Ansprüche, **dadurch gekennzeichnet, dass** der Verankerungsabschnitt (10) der Dichtung (8) als elastisch verformbare Struktur ausgestaltet ist, die so ausgelegt ist, dass sie unter Energieaufnahme zusammengedrückt wird, wenn das Stellglied (1) betätigt wird und sich das erste Ende (6) des Kolbens (5) in Richtung des zweiten Endes (4) des Gehäuses (2) bewegt und den Verankerungsabschnitt (10) berührt.

7. Stellglied (1) nach einem der vorhergehenden Ansprüche, **dadurch gekennzeichnet, dass** die Dichtung (8) aus Gummi, Kunststoff oder einer Kombination davon gefertigt ist.

8. Stellglied (1) nach einem der vorhergehenden Ansprüche, **dadurch gekennzeichnet, dass** die Kappe (9) an ihrer Position oben am zweiten Ende (7) des Kolbens (5) bleibt, nachdem das Stellglied (1) betätigt wurde.

9. Stellglied (1) nach einem der vorhergehenden Ansprüche, **dadurch gekennzeichnet, dass** der Verankerungsabschnitt (10) so ausgestaltet ist, dass er in dem Gehäuse (2) bleibt, nachdem das Stellglied (1) betätigt wurde, und so ausgelegt ist, dass er als Abdichtung zwischen dem Kolben (5) und dem Gehäuse (2) an seinem zweiten Ende (4) arbeitet.

10. Stellglied (1) nach einem der vorhergehenden Ansprüche, **dadurch gekennzeichnet, dass** das Gehäuse (2) einen pyrotechnischen Satz (11) umfasst, der sich am ersten Ende (3) des Gehäuses (2) befindet.

11. Fußgängersicherheitssystem, das eine Hebeanordnung für eine Motorhaube umfasst, **dadurch gekennzeichnet, dass** sie ein in einem der Ansprüche 1 bis 10 beschriebenes Stellglied (1) zum Anheben einer Motorhaube umfasst.

12. Verwendung eines Stellglieds nach einem der Ansprüche 1 bis 10 in einer Hebeanordnung für eine Motorhaube für ein Fahrzeug.

## Revendications

1. Actionneur (1) pour dispositif de sécurité dans un véhicule, ledit actionneur (1) comprenant un boîtier (2) doté d'une première extrémité (3) et d'une seconde extrémité (4) dont ladite première extrémité (3) est adaptée pour comprendre ou être reliée à une source d'énergie, un piston (5) adapté pour rentrer dans le boîtier (2) et ledit piston (5) comportant une première extrémité (6) et une seconde extrémité (7), ce par quoi ladite première extrémité (6) du piston (5) fait face à la première extrémité (3) du boîtier (2) quand le piston (5) est situé dans le boîtier (2), ledit actionneur (1) comprenant en outre un organe d'étanchéité (8) comportant un chapeau (9) recouvrant la seconde extrémité (7) du piston (5), ledit organe d'étanchéité (8) comprenant en outre une partie d'ancrage (10) qui est située entre le boîtier (2) et le piston (5) et formant ainsi un joint d'étanchéité entre le piston (5) et le boîtier (2) à la seconde extrémité (4) du boîtier,
**caractérisé en ce que**
ledit organe d'étanchéité (8), comprenant ledit chapeau (9) et ladite partie d'ancrage (10), est fabriqué en une seule pièce et il est conçu pour se briser quand l'actionneur (1) est activé de telle manière que le chapeau (9) sera séparé de la partie d'ancrage (10).

2. Actionneur (1) selon la revendication 1, **caractérisé en ce que** ledit organe d'étanchéité (8) comprend une section affaiblie ou des entailles entre le chapeau (9) et la partie d'ancrage (10) pour faciliter une séparation du chapeau (9) d'avec la partie d'ancrage (10) quand l'actionneur (1) est activé.

3. Actionneur (1) selon l'une quelconque des revendications précédentes, **caractérisé en ce qu**'au moins une partie de ladite partie d'ancrage (10) dudit organe d'étanchéité (8) est située entre le ou les côté(s) du piston (5) s'étendant longitudinalement et le côté intérieur du boîtier (2).

4. Actionneur (1) selon la revendication 3, **caractérisé en ce que** ladite partie d'ancrage (10) est conçue comme une pièce creuse comportant une extrémité ouverte et une extrémité fermée dotée dudit chapeau (9), ce par quoi ledit organe d'étanchéité (8) est adapté pour s'emboîter sur ladite seconde extrémité (7) dudit piston (5) de telle manière que le chapeau (9) recouvre ladite seconde extrémité (7) dudit piston (5) et la partie d'ancrage (10) creuse recouvre la ou les surface(s) latérale(s) du piston (5) adjacente(s) à sa seconde extrémité (7).

5. Actionneur (1) selon l'une quelconque des revendications précédentes, **caractérisé en ce que** ladite partie d'ancrage (10) dudit organe d'étanchéité (8) est conçue comme structure déformable plastiquement, adaptée pour s'affaisser lorsqu'elle absorbe de l'énergie quand ledit actionneur (1) est activé et que la première extrémité (6) du piston (5) se déplace vers la seconde extrémité (4) du boîtier (2) et vient en contact avec la partie d'ancrage (10).

6. Actionneur (1) selon l'une quelconque des revendications précédentes, **caractérisé en ce que** ladite partie d'ancrage (10) dudit organe d'étanchéité (8) est conçue comme structure déformable élastiquement, adaptée pour être comprimée lorsqu'elle absorbe de l'énergie quand ledit actionneur (1) est activé et que la première extrémité (6) du piston (5) se déplace vers la seconde extrémité (4) du boîtier (2) et vient en contact avec la partie d'ancrage (10).

7. Actionneur (1) selon l'une quelconque des revendications précédentes, **caractérisé en ce que** ledit organe d'étanchéité (8) est fabriqué en caoutchouc, plastique ou une combinaison de ceux-ci.

8. Actionneur (1) selon l'une quelconque des revendications précédentes, **caractérisé en ce que** ledit chapeau (9) reste dans sa position sur le dessus de la seconde extrémité (7) dudit piston (5) après que l'actionneur (1) a été activé.

9. Actionneur (1) selon l'une quelconque des revendications précédentes, **caractérisé en ce que** ladite partie d'ancrage (10) est conçue pour rester dans le boîtier (2) après que l'actionneur (1) a été activé et est adaptée pour fonctionner comme joint d'étanchéité entre le piston (5) et le boîtier (2) sur sa seconde extrémité (4).

10. Actionneur (1) selon l'une quelconque des revendications précédentes, **caractérisé en ce que** ledit boîtier (2) comprend une charge pyrotechnique (11) située à la première extrémité (3) du boîtier (2).

11. Système de sécurité pour piétons comprenant un agencement de soulèvement de capot, **caractérisé en ce qu**'il comprend un actionneur (1) tel que décrit dans l'une quelconque des revendications 1 à 10 pour soulever un capot.

12. Utilisation d'un actionneur selon l'une quelconque des revendications 1 à 10 dans un agencement de soulèvement de capot destiné à un véhicule.
